# EUROPÄISCHE PATENTSCHRIFT

(11) **EP 0 387 312 B1**
(45) Veröffentlichungstag und Bekanntmachung des Hinweises auf die Patenterteilung: **22.02.1995**
(21) Anmeldenummer: 89907062.7
(22) Anmeldetag: 07.07.1989
(51) Int. Cl.: G01D 11/02, G01B 3/00, F16C 39/06

(54) **LINEARFÜHRUNG FÜR PRÄZISIONSMASCHINEN**
LINEAR GUIDE FOR PRECISION MACHINES
GUIDAGE LINEAIRE POUR MACHINES DE PRECISION

(30) Priorität: 15.07.1988 DE 3823978
(43) Veröffentlichungstag der Anmeldung: 19.09.1990
(73) Patentinhaber: JACOB, Etienne, CH-8265 Mammern (CH)
(72) Erfinder: JACOB, Etienne, CH-8265 Mammern (CH)
(74) Vertreter: Patentanwälte Breiter + Wiedmer AG
(86) Internationale Anmeldenummer: CH8900131
(87) Internationale Veröffentlichungsnummer: WO9000722

(56) Entgegenhaltungen:
- DE-A- 2 412 218
- DE-U- 8 417 309
- IBM-Panorama, No. 18, August 1991
- Neue Zürcher Zeitung vom 28.10.1987
- Neue Zürcher Zeitung vom 07.03.88
- Technische Rundschau, No. 24/87, Seite 119
- Kfk-Nachrichten, Jahrgang 20, No. 1/88, Seiten 36-38
- Japanese Applied Physics, Band 28, No. 1, Januar 1989, Seiten L-82-L84
- Enzyklopädie Naturwissenschaft und Technik, Verlag moderne Industrie, München, DE, 1980, Seiten 2600-2601

## Beschreibung

Die Erfindung betrifft eine Linearführung für Präzisionsmaschinen nach dem Oberbegriff von Patentanspruch 1.

Bei einer bekannten Lagerung für Meßmaschinen nach dem DE-U1 84 17 309 werden für die präzise Linearführung Luftlager bzw. Magnetlager eingesetzt. Dadurch entsteht eine reibungsfrei arbeitende Anordnung, deren Genauigkeit im wesentlichen von der mechanischen Stabilität, den Herstelltoleranzen etc. der einzelnen Bauteile, insbesondere des stationären und des beweglichen Lagerelementes, abhängt. Die in beide Lagerelemente eingearbeiteten Magnete sind offensichtlich permanent ausgebildet. Es besteht jedoch auch die Möglichkeit, für spezielle Anwendungsfälle elektrische Magnete einzusetzen. Ein Antriebssystem für die lineare Bewegung wird in dem genannten Schutzrecht nicht erwähnt, ist jedoch für gesteuerte Meßoperationen erforderlich, wenn von einer aufwendigen manuellen Bedienung abgesehen werden soll.

Bei solchen halbautomatisch oder automatisch arbeitenden Präzisionsmaschinen werden deshalb ggf. elektrische Antriebsvorrichtungen und elektrische Magnetlager eingesetzt. Dabei konnte bisher nicht verhindert werden, daß die entstehende, elektrische Verlustwärme zur Aufheizung der Lagerelemente führte. Insbesondere eine partielle, bereits geringe Erwärmung des stationären Lagerelementes kann dabei zu Abweichungen von dessen Linearität führen, wodurch sich erhebliche Positionierungsfehler ergeben. Selbst die Verwendung dieser Präzisionsmaschinen in temperierten Räumen konnte das Problem nicht beseitigen.

Aus der DE,A 2412218 ist ein Elektromotor mit Supraleitung, eine Elektosupraturbine, bekannt. Ein Magnetfeld mit Läufern oder Ständern weist einseitige supraleitende Magnetverdrängungskörper auf, welche bei einer einseitigen Verdrängung des Magnetfeldes selbst entgegengesetzt verdrängt werden. Die Magnetfeldverdrängungskörper weisen vorzugsweise eine einseitige optimale Verdrängungsform auf, welche aus einem supraleitenden Material, aber auch aus diamagnetischen Stoffen, Elementen, Legierungen und Verbindungen bestehen. Im Rahmen des Elektromotors wird eine lineare Bewegung angedeutet.

Aufgabe der Erfindung ist es, eine Linearführung für Präzisionsmaschinen der eingangs genannten Art zu schaffen, die bei allen maschinellen Betriebsbedingungen zuverlässig und extrem genau arbeitet und bei der die von den eigenen Aggregaten erzeugte Wärme keinen Einfluß auf die Genauigkeit ausübt.

Die Aufgabe wird nach dem kennzeichen von Patentanspruch 1 gelöst.

Das meist an einem der Lagerelemente angebrachte Antriebssystem ist dabei in Supraleittechnik ausgeführt. Seine Wicklung besteht aus elektrischen Leitern aus supraleitendem Material. Diese bekannten Materiallen haben z. B. bei der so genannten Sprungtemperatur keinen elektrischen Widerstand, so daß in der Wicklung keine sonst als Verlustwärme abgestrahlte Energie erzeugt wird. Allerdings muß für die Kühlung der Wicklungsdrähte auf die genannte Temperatur ein geeignetes Kühlsystem bekannter Bauweise vorgesehen werden. Dieser zusätzliche Aufwand ist im Sinne einer gesteigerten Genauigkeit bei vielen Anwendungen gerechtfertigt. Da durch die erfindungsgemäßen Merkmale der größte Wärmeerzeuger ausgeschaltet ist, wirkt auf die Lagerelemente nahezu keine, von eigenen Aggregaten erzeugte Wärme ein. Die Folge davon ist, daß vorteilhafterweise eine extrem präzise lineare Führung über die gesamte Betriebszeit gegeben ist.

Der rotationsfrei arbeitende Linearmotor eignet sich wegen seiner kompakten Bauweise und insbesondere wegen der nicht erforderlichen mechanischen Umsetzung von z. B. Rotation in Linearbewegung besonders gut für die erfindungsgemäße Linearführung.

Erfindungsgemäss ist eine quer zur Bewegungsrichtung wirksame, mit supraleitenden elektrischen Spulen versehene, lineare Magnetlagerung vorgesehen, wobei diese als integrierte Kombination von linearem Magnetlager und Linearmotor ausgeführt ist. Das bewegliche Lagerelement ist mit elektrisch aktivierbaren Magneten versehen und wird dadurch in allen Richtungen quer zur Bewegungsrichtung gegenüber dem stationären Lagerelement abgestützt. Durch die spezielle Ausführung der Spulendrähte aus supraleitendem Material wird auch hier analog zu den Vorzügen des oben beschriebenen Antriebssystems im wesentlichen keine Wärme erzeugt. Eine besonders kompakte und insbesondere auf einfache Weise gemeinsam zu kühlende Anordnung bildet die Kombination der linearen Magnetlagerung mit dem Linearmotor.

Die erfindungsgemäße Linearführung ist durch die genannten Merkmale frei von Temperaturfehlern infolge interner Wärmeerzeugung, kompakt und reibungsfrei. Sie bildet die Grundlage für hochpräzise Aufgaben verschiedener Art im Maschinenbau und insbesondere in der Meßtechnik.

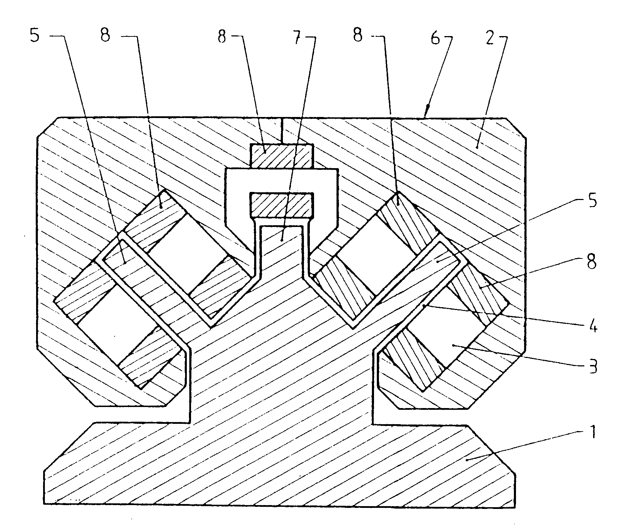

Die Erfindung wird nachfolgend am in der Zeichnung dargestellten Beispiel beschrieben. Die einzige Figur zeigt schematisch einen teilweisen Querschnitt einer Linearführung mit Magnetlagern und Linearmotor in Supraleittechnik.

Die in der Figur dargestellte Linearführung besteht aus einem langgestreckten, stationären 1 und einem darauf in Längsrichtung beweglichen Lagerelement 2. Die lineare Lagerung erfolgt mit elektrisch aktivierten Magneten 3. Sie sind jeweils über einen Luftspalt 4 in Abstand zur betreffenden, ebenen Oberfläche von am stationären Lagerelement 1 angebrachten Vorsprüngen 5 angeordnet. Eine geeignete, nicht dargestellte Stromversorgung speist jeden Magnet 3 getrennt. Die Größe des Stromes wird durch ebenfalls nicht dargestellte Sensoren geregelt, die die Breite des betreffenden Luftspaltes 4 messen. Durch die im wesentlichen V-förmige Anordnung der Vorsprünge 5 bzw. Magnete 3 wird eine horizontale und vertikale Lagestabilisierung des beweglichen 2 gegenüber dem stationären Lagerelement 1 erzielt. Dadurch entsteht eine reibungsfreie Linearführung.

Ein in der Mitte des beweglichen Lagerelementes 2 angebrachter Linearmotor 6 wirkt zusammen mit einer am stationären Lagerelement 1 vorgesehenen Schiene 7 als lineares Antriebssystem und ist nur schematisiert dargestellt. Auch der Linearmotor 6 arbeitet berührungsfrei und dadurch ohne Reibung.

Wirkungsweise und Steuerung der Magnetlagerung 3, 5 und des Linearmotors 6 beruhen auf grundsätzlich bekannten Merkmalen. Die Spulen 8 beider Systeme sind jedoch mit elektrischen Leitern aus supraleitendem Material gewickelt, das durch ein nicht dargestelltes, bekanntes Aggregat gekühlt wird. Die erforderliche Temperature richtet sich nach der Zusammensetzung des supraleitenden Materials. Ausserdem liegt bei dem beispielsweise bekannten Barium-Kupferoxid Ba₂Cu₃O₇ die sogenannte Sprungtemperatur, bei der der Strom den elektrischen Leiter ohne Widerstand durchfließt, bei 92° Kelvin, d.h. bei -181 °C. Das Kühlaggregat könnte dabei mit flüssigem Stickstoff, der die als z. B. Hohlleiter ausgeführten elektrischen Leiter durchströmt und deren Material stabil auf der Sprungtemperatur hält, arbeiten. Dadurch würde in der gesamten Linearführung nahezu keine Wärme entstehen.

## Patentansprüche

1. Linearführung für Präzisionsmaschinen mit einem stationären und einem reibungsfrei beweglichen Lagerelement (1,2), welches letztere mit einem linearen Antriebssystem (6) zusammenwirkt,
dadurch gekennzeichnet, dass
die quer zur Bewegungsrichtung des beweglichen Lagerelements (2) wirksame, lineare Lagerung, die eine Magnetlagerung (3) ist, wobei für die horizontale und vertikale Lagestabilisierung des beweglichen (2) gegenüber dem stationären Lagerelement (1) am stationären Lagerelement (1) Vorsprünge (8) vorgesehen sind, welche mit den entsprechenden Magneten (3) am beweglichen Lagerelement (2) eine im wesentlichen V-förmige Anordnung aufweisen, und das Antriebssystem, das ein rotationsfrei arbeitender Linearmotor (6) in der Mitte des beweglichen Lagerelements (2) ist und mit einer am stationären Lagerelement (1) vorgesehenen Schiene (7) zusammenwirkt, als kompakte integrierte Kombination ausgebildet ist, wobei Magnetlagerung (3) und Linearmotor (6) Spulen (8) aus gemeinsam gekühlten, supraleitenden Wicklungsdrähten haben.

2. Linearführung nach Anspruch 1, dadurch gekennzeichnet, dass die Wicklungsdrähte von einem Kühlsystem an sich bekannter Bauweise umgeben sind.

3. Linearführung nach Anspruch 1 oder 2, dadurch gekennzeichnet, dass die Wicklungsdrähte als Hohlleiter für ein Kühlmedium ausgebildet sind.

## Claims

1. Linear guide for precision machines with one stationary and one friction-free moving bearing element (1, 2), the latter of which cooperates with a linear drive system (6),
characterised in that
the linear bearing which acts across the direction of movement of the moving bearing element (2) is a magnet bearing (3), where for the horizontal and vertical position stabilisation of the moving bearing (2) in relation to the stationary bearing element (1) projections (8) are provided on the stationary bearing element (1) which together with the corresponding magnets (3) on the moving bearing element (2) form an essentially V-shaped arrangement, and the drive system which is a rotation-free linear motor (6) in the centre of the moving bearing element (2) and which cooperates with a rail (7) provided on the stationary bearing element (1) is formed as a compact integrated combination, where the magnetic bearing (3) and linear motor (6) have coils (8) of commonly cooled superconductive winding wires.

2. Linear guide according to Claim 1, characterised in that the winding wires are surrounded by a cooling system in the known manner.

3. Linear guide according to Claim 1 or 2, characterised in that the winding wires are formed as hollow conductors for a cooling medium.

## Revendications

1. Guidage linéaire pour machines de précision comportant un élément de palier stationnaire et un élément de palier mobile (1,2), ce dernier coopérant avec un système d'entrainement linéaire,
caractérisé en ce que
le guidage linéaire, un guidage magnétique (3) agissant transversalement à la direction de mouvement des éléments de paliers mobiles(2), la stabilisation de position horizontale et verticale des éléments de paliers mobiles (2) par rapport aux éléments de paliers stationnaires (1) étant réalisée par des saillies (8) sur les éléments stationnaires(1) formant avec les aimants (3)réspectifs aux éléments de paliers mobiles (2) substentiellement une configuration en forme de V, et le système d'entrainement fait par un moteur linéaire libre de tout mouvement de rotation (6) situé au centre des éléments de paliers mobiles (2) et coopérant avec un rail de guidage (7) monté sur l'élément de paliers stationnaires (1) est une combinaison intégrée compacte, les bobines (8) du guidage magnétique (3) et du moteur linéaire (6) étant faites en fil de bobinage en matériel supraconducteur à refroidissement commun.

2. Guidage linéaire selon la revendication 1, caractérisé en ce que les fils des bobinages sont entourés d'un système de refroidissement d'un type connu.

3. Guidage linéaire selon les revendications 1 et 2, caractérisé en ce que les fils des bobinages sont creux, ceci permettant la circulation d'un milieu de refroidissement.
